# EUROPEAN PATENT SPECIFICATION

(11) **EP 1 642 012 B1**
(45) Date of publication and mention of the grant of the patent: **19.05.2010**
(21) Application number: 04749082.6
(22) Date of filing: 29.06.2004
(51) Int. Cl.: F01N 3/022

(54) **A FILTER ASSEMBLY FOR TREATMENT OF A GAS FLOW, AND A PARTICULATE FILTER**
FILTERANORDNUNG ZUR BEHANDLUNG EINES GASSTROMS UND TEILCHENFILTER
DISPOSITIF DE FILTRAGE POUR EFFLUENTS GAZEUX ET FILTRE A PARTICULES

(30) Priority: 04.07.2003 SE 0302014
(43) Date of publication of application: 05.04.2006
(73) Proprietor: VOLVO TECHNOLOGY CORPORATION, 405 08 Göteborg (SE); Ford Global Technologies, LLC, Dearborn, MI 48126 (US)
(72) Inventor: HOLMGREN HÄGG, Anna, S-423 55 Torslanda (SE); JOBSON, Edward, S-442 77 Romelanda (SE); FYHR, Christian, S-428 35 Kallered (SE)
(74) Representative: Andersson, Per Rune
(86) International application number: PCT/SE2004/001044
(87) International publication number: WO 2005/003528

(56) References cited:
- EP-A2- 0 308 972
- WO-A1-03/069139
- DE-A- 4 134 949
- DE-A- 10 229 405
- DE-A1- 3 709 671
- US-A- 5 019 142
- US-A- 5 390 492
- US-A- 5 660 800
- US-B1- 6 190 624

## Description

### TECHNICAL FIELD:

The present invention relates to a filter assembly for treatment of a gas flow and comprising: a particulate filter having an inlet end face, an outlet end face, a peripheral wall and a honeycomb wall structure at least partly of porous ceramic material defining a plurality of channels extending from said inlet end face to said outlet end face, wherein said wall structure is adapted for accumulating particulate matter during passage of said gas flow between said channels, an inlet for feeding said gas flow to said inlet end face, an outlet for discharging said gas flow after passing through said particulate filter, and a housing accommodating said particulate filter and defining a passage from said particulate filter to said outlet.

The present invention also relates to a particulate filter for absorbing solid matter from a gas flow and comprising an inlet end face, an outlet end face, a peripheral wall and a honeycomb wall structure at least partly of porous ceramic material defining a plurality of channels extending from said inlet end face to said outlet end face for guiding said gas flow, wherein said wall structure is adapted for accumulating particulate matter during passage of said gas flow between said channels.

### BACKGROUND OF THE INVENTION:

In the field of vehicles which are operated by combustion engines, there is a general demand for low emissions of unwanted substances and particulate matter in exhaust gases from an engine. As regards conventional petrol engines, the exhaust gases are normally purified from oxides of nitrogen (NOₓ), hydrocarbon compounds (HC), and carbon monoxide (CO) by means of an exhaust catalyst through which the exhaust gases are guided. As regards diesel engines, there is a corresponding requirement to remove solid particles, for example in the form of soot, from the exhaust gas stream.

In order to eliminate particulate matter from diesel engine exhaust gases, it is previously known to utilize various types of filters. For example, one type of filter which is used today is designed with a honeycomb structure forming a plurality of generally parallel channels being defined by a wall structure of porous ceramic material. When diesel exhaust gas is guided through the filter, said exhaust gas will be forced through the walls of the wall structure in a manner so that soot and other particulate matter in the exhaust gas will be deposited in the porous walls. Such a filter is designed for providing generally complete filtration of soot and other solid particles, i.e. at least 95% of said particles, without significantly blocking the flow of the exhaust gases.

Due to the fact that soot will be gradually accumulated in the wall structure of the filter, a soot layer will be formed. This layer will cause an increase of the back pressure of the filter. This will affect the efficiency of the engine in a negative manner, which is a disadvantage. Eventually, the pressure drop will become unacceptable. In order to solve this problem, it is previously known to regenerate the filter, i.e. to remove the particles which have been accumulated in the filter, at regular intervals. The regeneration process suitably takes place by heating the filter so that combustion of the particles will occur at a certain increased temperature. The regeneration process is suitably accomplished by means of a special engine control, whereby the temperature in the filter rises to a sufficient temperature, or possibly by means of a special electric heater arranged in the filter. After the regenerating process, the filter can once again be utilized for accumulating particles.

A previously known particulate filter having a plurality of essentially parallel channels and being adapted so as to be regenerated is disclosed in the patent document EP 1217185.

Even though the accumulated soot in the filter can be combusted by means of the above-mentioned regeneration process, a further problem in the field of particulate filters relates to the fact that non-combustible ash particles (for example in the form of metal oxide particles, sulfates and phosphates) exist in the exhaust gas as a result of the combustion process in the engine. These ash particles will not be removed during a regeneration process of the above-mentioned kind. Eventually, the accumulation of ash particles will cause the filter to be gradually filled and obstructed with ash, which in turn means that the pressure drop across the filter will increase.

A solution to the problem of accumulating ash particles is to use a filter of a size which is sufficiently large for storing the entire amount of ash which can be expected during the lifetime of the vehicle. An alternative solution to said problem is to arrange the filter as an exchangable unit, i.e as a filter unit which is intended to be removed and discarded, and then replaced with a new filter unit, when the old filter has been used during operation of the vehicle a certain number of kilometers.

However, both of these two solutions have disadvantages. A relatively large filter unit requires a large space in a vehicle, which is a disadvantage in today's vehicles, in which the available space is limited. A relatively large filter also leads to a high cost. Furthermore, the use of a replaceable unit is costly and requires the effort of switching filter at certain time intervals. There is obviously a risk that the owner of the vehicle forgets to switch filters, whereby the use of an old, deteriorated filter would possibly affect the efficiency of the engine in a negative manner.

Another solution to the problem of accumulated ash is to use an ash collecting unit which is arranged together with a particulate filter for accumulating the ash. An arrangement with an ash collecting unit is previously known from the patent document EP 1132582.

Closest state of the art is US 5,019,142 issued to Waschkuttis. Waschkuttis describes a particulate filter having a plurality of channels for purified (refined) exhaust gas which are blocked at the side of the exhaust gas inlet and channels for non-purified (unrefined) exhaust gas which are open to an ash collecting unit. The ash collecting unit is arranged as an extension of the particulate filter, whereby the ash collecting unit serves as plug for the unrefined gas channel.

### SUMMARY OF THE INVENTION:

An object of the present invention is to provide an improved filter assembly for treating and purifying diesel engine exhaust gases in which the above-mentioned problems can be avoided.

The above-mentioned object is accomplished by means of a filter assembly of the type as mentioned initially, with the features according to claim 1.

An important advantage with the present invention is that it constitutes a effective device for removing solid matter from diesel exhaust gases and other sources of such solid matter. The invention allows an even inlet gas flow with an optimum flow distribution of the gas flow through the particulate filter. In particular, the wall structure and the channels of the particulate filter is designed in a manner so as to provide a large available wall surface for capturing solid matter such as soot.

Also, the invention is used for accumulating ash which has been carried with the gas flow. In particular, it can be noted that the ash collecting unit as used in the invention can be designed so that it does not have to be changed for a new one, i.e. it can be designed in order to allow accumulation of the entire amount of ash which can be expectured during the lifetime of the vehicle in question.

A particular advantage of the invention relates to the fact that it allows heat exchange between an incoming gas flow and a return flow, i.e. a flow in the reverse direction as compared with said incoming gas flow, during operation of the particulate filter. This will result in improved regeneration of the particulate filter since the heat exchange process makes it easier to obtain the required temperature for said regeneration process. According to an embodiment of the invention, the regeneration process can be further improved by arranging a heating device in the ash collecting device.

In the context of this application, the term "particles" is used in order to describe undesired emissions of solid particles in the form of primarily soot, soluble organic fractions, sulfates and ash which normally form part of the exhaust gases from a diesel engine or a corresponding engine which is adapted for operation with a surplus of oxygen. However, the invention is not limited to be used with vehicle engines, but can be used for treating other gases containing unwanted solid matter.

### BRIEF DESCRIPTION OF THE DRAWINGS:

The invention will now be described with reference to a preferred embodiment and the appended drawings, in which:
- Fig. 1: shows in a schematic manner a filter assembly in accordance with the present invention;
- Fig. 2: shows an enlarged perspecitive view of a particulate filter according to the present invention;
- Figs. 3a-d: show patterns of plugs provided in a particulate filter according to Fig. 2;
- Fig. 4: shows in a schematic manner a filter assembly in accordance with an alternative embodiment of the invention;
- Fig. 5a: shows in a schematic manner a filter assembly in accordance with a further alternative embodiment of the invention;
- Fig. 5b: shows a cross-section of the filter assembly according to Fig. 5a, along the line A-A as shown in Fig. 5a;
- Fig. 6: shows a particulate filter according to said further alternative embodiment; and
- Figs. 7a-c: show patterns of plugs provided in a particulate filter accoridng to Figs. 5a, 5b and 6.

### PREFERRED EMBODIMENTS:

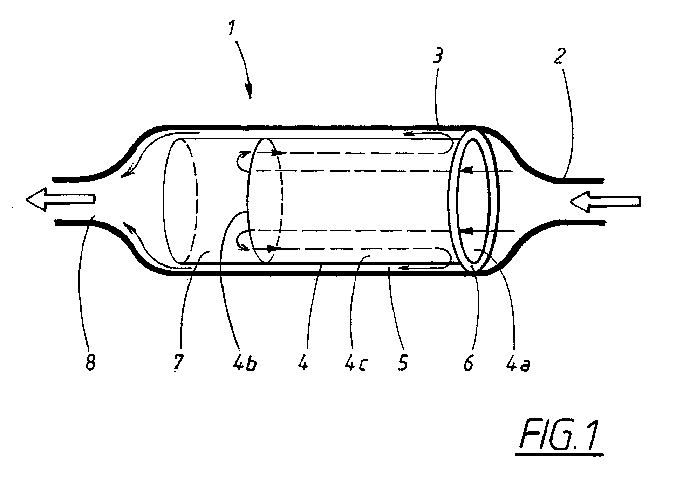

The present invention will now be described, firstly with reference to Fig. 1, which shows in a schematic manner a filter assembly 1 in accordance with the present invention. According to a first embodiment of the invention, the filter assembly 1 comprises an inlet 2 for an incoming flow of gas, as indicated by means of an arrow. The invention is primarily intended for purification of exhaust gases from a diesel engine in a vehicle such as a car or a truck. For this reason, the terms "gas", "exhaust gas", "gas stream" etc., which are used below, refer to the exhaust gases from such a type of engine. However, it should be noted that the invention is not limited to be used in diesel engines only, but may be utilized for all types of combustion processes where elimination of solid matter such as carbon particles in a gas flow is desirable, for example in connection with other types of combustion engines which at least periodically are operated by a surplus of oxygen.

Due to the fact that the invention is suitably intended for use in a vehicle, the filter assembly 1 as shown in Fig. 1 is adapted to be mounted on the underside of said vehicle, between the vehicle's engine and exhaust pipe (not shown).

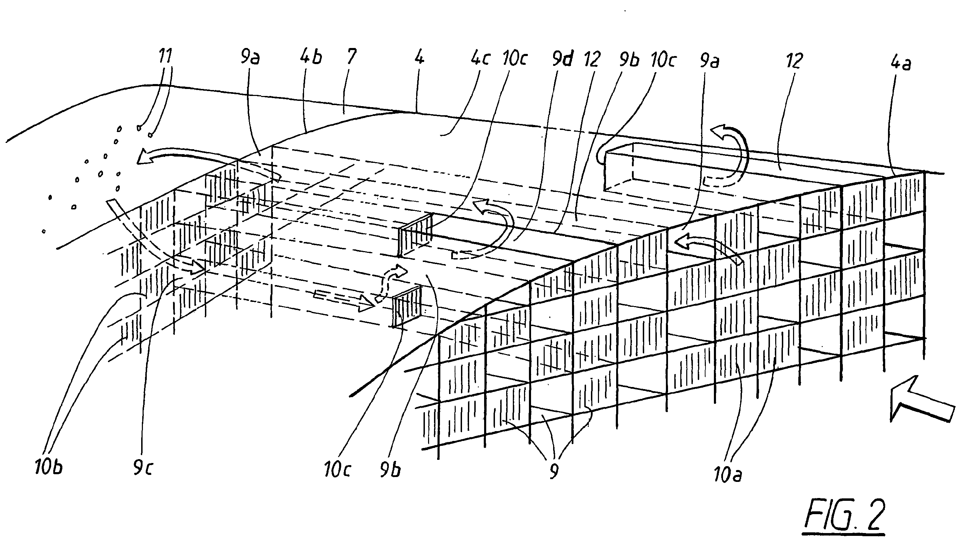

The filter assembly 1 comprises a filter housing 3 to which the inlet 2 is connected. The housing 3 defines a tubular or cylindrical internal space which accommodates a particulate filter 4 which is intended for purifying an incoming gas stream from solid matter, for example in the form of carbon soot. The particulate filter 4 is generally cylindrical and has an inlet end face 4a, an outlet end face 4b and a peripheral wall 4c. Furthermore, the particulate filter 4 is adapted for passage of said gas stream from the inlet end face 4a to the outlet end face 4b in a manner which will be described in greater detail below with reference to Fig. 2. In particular, it can be noted that the particulate filter 4 is mounted in the housing 3 so that a passage 5 is defined between the outside of the peripheral wall 4c and the inside of the housing 3 and further extends towards an output 8 of the filter assembly 1. From the output 8, the outgoing gas flow is fed towards the atmosphere (suitably via an exhaust pipe).

The inlet 2 is prevented from being connected with the passage 5 by means of a wall element 6 which is designed so as to form a seal against the inside of the housing 3. In case the housing 3 is tubular, i.e. having a generally circular cross-section, the wall element 6 is also shaped as a generally circular element which is mounted in the passage 5. However, the invention is not limited to a particular geometry of the housing or the wall element 6. Furthermore, the wall element 6 is preferably aligned with the inlet end face 4a of the particulate filter 4. This means that the filter assembly 1 is adapted so that the incoming flow of gas via the inlet 2 is completely guided into the particulate filter 4 via the inlet end face 4a, i.e. it is prevented from being fed to the passage 5 directly from the inlet 2.

In a manner which will be described below, and which is only indicated in a schematical manner in Fig. 1, a flow of exhaust gases may enter through the inlet end face 4a, exit through the rear end face 4b and then reach an ash collecting unit 7. Preferably, the ash collecting unit 7 is of cylindrical shape and is designed as an extension of the particulate filter 4. In this manner, the ash collecting unit 7 and the particulate filter 4 together form a generally integrated unit for purifying exhaust gases and for collecting ash which is carried with the exhaust gas entering the inlet 2.

When the gas flow which is guided through the particulate filter 4 reaches the ash collecting unit 7, ash will be deposited in said ash collecting unit 7. Furthermore, due to the fact that the ash collecting unit 7 is a closed unit having only an opening which faces (and is aligned with) the outlet end face 4b of the particulate filter 4, the exhaust gases will be guided back into the particulate filter 4. This process of providing a return flow of the exhaust gases, which is an important feature of the invention, will now be described in greater detail below with reference to Fig. 2, which is a perspective view of a section of the particulate filter 4 and the ash collecting unit 7, as regarded in a view towards the inlet end face 4a. It can be noted that Fig. 2 is an enlarged view as compared with Fig. 1.

As indicated in Fig. 2, the particulate filter 4 is designed as a honeycomb structure being formed as a matrix with a large number of generally parallel cells or channels 9. In a manner which is previously known, the channels 9 are suitably formed with a generally square cross-section and are separated from each other by means of a wall structure 10 of porous ceramic material, such as for example cordierite or silicon carbide, which is suitable for absorbing soot and similar solid particles in a gas stream guided along the wall structure. Such a honeycomb structure having a multiplicity of parallel channels formed by a porous wall structure is previously known per se. An important feature of the present invention, however, relates to the fact that the particulate filter 4 and its channels 9 are arranged in a manner so as to allow an incoming flow of exhaust gas to be guided through the particulate filter 4 and into the ash collecting unit 7, in which ash is deposited, and to bring the exhaust gas flow to return through certain channels in the particulate filter 4 before being fed out from the particulate filter 4. To this end, the inlet end face 4a is formed with a pattern of alternating front end plugs 10a and front end openings, i.e. so as to form a pattern of corresponding plugged channels and open channels. This means that some of the channels 9 are plugged in the front end section by means of a wall element, i.e. said front end plug 10a, so as to prevent gas from entering such a plugged channel.

During operation of the particulate filter 4, exhaust gas is fed towards the inlet end face 4a so that it enters those of the channels 9 which are open and not blocked by means of a front end plug 10a. This means that the exhaust gas flow will enter channels such as the open channel indicated by means of reference numeral 9a in Fig. 2. This is also indicated by means of an arrow at the entrance of said open channel 9a. The exhaust gas being guided through said channel 9a will eventually reach the ash collecting unit 7, as indicated by means of a further arrow. During the passage of the gas flow from the inlet end face 4a to the outlet end face 4b, the gas may also flow through the walls forming the wall structure 10. Particulate matter in the gas flow will be deposited in the wall structure 10 during such passage of the gas flow. Furthermore, and as explained above, ash particles 11 being carried with the exhaust gas will be deposited in the ash collecting unit 7. Since the ash collecting unit 7 is a closed structure, being open only on the end which faces the outlet end face 4b of the particulate filter 4, the exhaust gas cannot escape from the ash collecting unit 7 in any other manner than in the form of a return flow back into the particulate filter 4. This is also indicated by means of an arrow in Fig. 2.

It should be noted that during passage of exhaust gas through the open channel 9a, soot and similar solid matter will be deposited on the porous walls limiting said channel 9a. A corresponding flow of exhaust gas (and deposition of soot) as in said channel 9a will occur for all the other channels of the particulate filter 4 which are open at the inlet end face 4a. For reasons of simplicity, however, only one such channel 9a is indicated in Fig. 2.

In order to guide the return flow of the exhaust gas in a desired manner back through the particulate filter 4, the outlet end face 4b is formed with a particular pattern of rear end plugs 10b. More precisely, the channels 9 are plugged in a checkered pattern in the outlet end face 4b, wherein the above-mentioned open channel 9a is formed with an opening in the inlet end face 4a and an opening in the outlet end face 4b (see Fig. 2), and wherein certain other channels are blocked by means of rear end plugs 10b. Consequently, no return flow of exhaust gas is possible through those channels in which a rear end plug 10b is provided. This means that certain channels, such as the one immediately to the left of the above-mentioned open channel 9a, and which is indicated by means of reference numeral 9b in Fig. 2, will be plugged in both the inlet end face 4a and the outlet end face 4b. Instead, certain other channels, which are below referred to as return channels 9c, will be open for the return flow of gas from the ash collecting unit 7.

The return channel 9c as indicated in Fig. 2, and in which the return flow of exhaust gas may enter the particulate filter 4, has a channel plug 10c inside said channel 9c. The channel plug 10c is positioned along said return channel 9c at a certain distance from the front end face 4a. This means that when the return flow reaches the channel plug 10c, the flow cannot continue any further in that particular return channel 9c but will be forced via its channel walls to flow into a neighbouring channel, i.e. a channel situated above or below, alternatively to the left or to the right, with respect to the return channel 9c containing the channel plug 10c. This is indicated by means of a further arrow in Fig. 2, which shows that the flow in said return channel 9c is guided to a neighbouring channel 9b located above the first-mentioned return channel 9c. This neighbouring channel 9b is of the type as mentioned above having both a front end plug 10a and a rear end plug 10b. This means that the exhaust gas is forced from this channel 9b via its walls and further to other channels. As indicated in Fig. 2, the channel 9d which is located above said "neighbouring channel" 9b is arranged so that it has a front end plug 10a and also a channel plug 10c, and is also formed with a slit-shaped opening 12, i.e. an opening in the peripherial wall 4c of the particulate filter 4. In this manner, said channel 9d defines an outlet for guiding exhaust gas from the particulate filter 4.

It can consequently be noted that the flow entering the return channel 9c will eventually reach the outlet channel 9d. From the outlet channel 9d, the exhaust gas will be guided out from the particulate filter 4 via slits 12 in the peripheral wall 4c (of which only two slits are indicated in Fig. 2). This is also indicated by means of an arrow in Fig. 2. With renewed reference to Fig. 1, it can now be noted that this outgoing flow from each slit 12 is prevented from reaching the inlet 2 by means of the wall element 6 which separates the inlet 2 from the passage 5. In this manner, the flow of exhaust gas which has been guided through the particulate filter 4, to the ash collecting unit 7 and then in a return flow to the outlet channel 9d, will be guided further to the passage 5 and then further on to the outlet 8 so as to discharge said gas flow after having passed through the particulate filter 4.

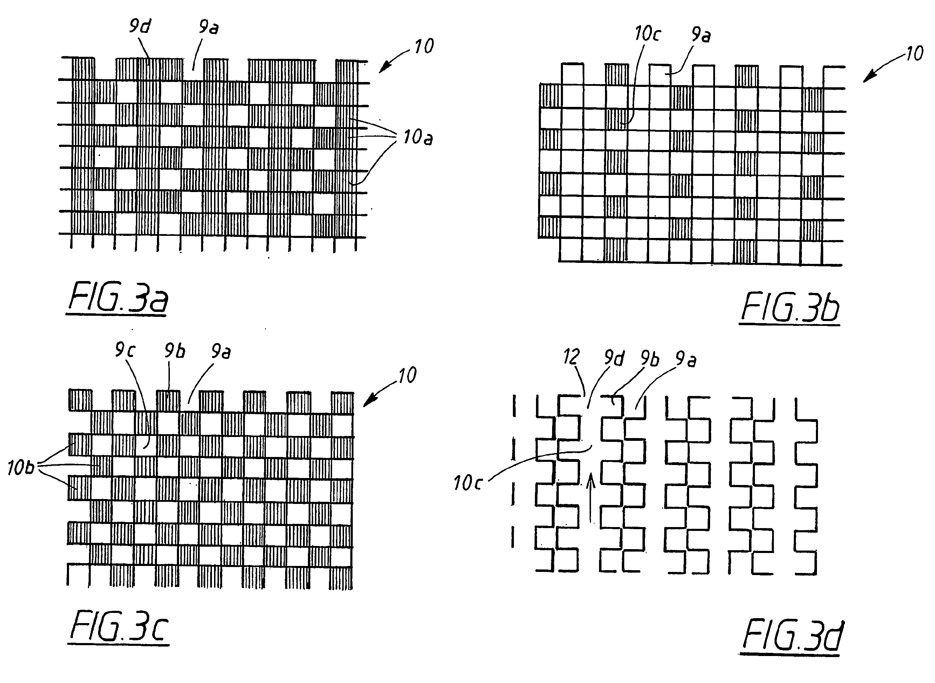

Fig. 3a is a schematical front view of the pattern of front end plugs 10a in the inlet end face 4a. As mentioned above, the pattern is designed so that a certain number of the channels 9 are open. The particular channel indicated by means of reference numeral 9a in Fig. 3a corresponds to the channel 9a indicated in Fig. 2. Also, exhaust gas will enter the particulate filter 4 through all open channels on the inlet end face 4a. Furthermore, the outlet channel indicated by means of reference numeral 9d in Fig. 3a corresponds to the same outlet channel 9d in Fig. 2. This outlet channel 9d is also provided with an outlet slit 12, which is not indicated in Fig. 3a but which is indicated in Fig. 2.

Fig. 3b is a schematical cross-sectional view showing the pattern of channel plugs 10c. The channel plug indicated by means of reference numeral 10c in Fig. 3b (and which is positioned in the return channel 9c) corresponds to the channel plug 10c as shown in Fig. 2.

Furthermore, Fig. 3c is a view of the outlet end face 4b of the particulate filter 4. As indicated above, the outlet end fact 4b has a pattern of rear end plugs 10b which define a continuous checkered pattern of plugged channels and open channels. The open channel as indicated by means of reference numeral 9c in Fig. 3c corresponds to channel 9c in Fig. 2.

Furthermore, Fig. 3d is a cross-sectional view of the particulate filter 4 taken at a position between the inlet end face 4a and the position of the channel plugs 10c. Fig. 3d indicates that due to the design of the wall structure and the plugs, a passage is formed for the returning gas flow towards the slits 12 which are positioned along the periphery of the particulate filter 4. In other words, the positions of the plugs 10a, 10b, 10c form a number of paths (of which one path is indicated by means of an arrow in Fig. 3d) along which the exhaust gas is guided. With reference also to Figs. 1 and 2, the gas flow is further guided out through the slits 12, via the passage 5 and further towards the outlet 8 of the filter assembly.

As indicated in Figs. 3a-3d, it can be noted that the pattern of front end plugs 10a, rear end plugs 10b and channel plugs 10c is arranged so that some of the channels in the wall structure 10 are open for passage of exhaust gas in via the front end face 4a and further through the entire particulate filter 4 to the ash collecting unit 7. Such open input channels are indicated by means of reference numeral 9a in Figs. 3a-3d, and also in Fig. 2. Furthermore, some of the channels are closed in both ends, i.e. by means of front end plugs 10a and rear end plugs 10b, such as for example the channel indicated by means of reference numeral 9b in Figs. 3a-3d.

Also, some of the channels are open in the outlet end face 4b and are provided with a channel plug 10c, such as the channel indicated by means of reference numeral 9c in Fig. 3c and Fig. 2. Such a channel 9c is also provided with an inlet end plug 10a in the inlet end face 4a of the particulate filter 4. Finally, some of the channels along the periphery of the particulate filter 4, such as the channel 9d in Fig. 2 and Fig. 3a, are formed with a slit 12.

The pattern of the various plugs in the particulate filter 4 constitutes an arrangement for guiding an incoming gas flow towards the ash collecting unit 7 and for guiding the gas flow in a generally radial direction towards the passage 5, via the slits 12 in the peripheral wall 4c. The incoming gas flow strikes the front surface which is defined by the inlet end face 4b and exits through the peripheral wall 4b after flowing through the particulate filter 4 as described above.

According to what has been explained, the outlet end face 4b of the particulate filter 4 forms an interface with the opening of the ash collecting unit 7. This interface is located downstream of the particulate filter 4. In this manner, the gas flow which enters the particulate filter 4 will force any ash particles to be deposited into the ash collecting unit 7. This also means that the ash particles cannot get trapped in a channel which is plugged in both ends, which is an advantage.

Due to the manner in which the exhaust gas flow is directed through the particulate filter 4 according to the invention, i.e. first towards the ash collecting unit 7 and then in the opposite direction through the particulate filter 4 and finally towards the slits 12 along the periphery, a heat exchanging function is provided. This means that the incoming flow of exhaust gas is heated by means of the return flow from the ash collecting unit 7. This heating can be used for initiating or improving a regeneration process at regular intervals in order to combust soot particules which have been collected in the wall structure of the particulate filter. Due to the heat exchange as described above, a sufficiently high temperature for combustion of the particles is more easily reached. In this regard, it can be noted that the required temperature for a regeneration process is approximately 300-600°, depending on the concentration of NO₂ och oxygen in the gas flow.

According to an alternative embodiment for providing the required increase in temperature for the regeneration process, the wall structure 10 of the particulate filter 4 can be coated by means of a catalytic coating material. Such a coating material may be used in order to lower the temperature at which soot can be combusted, thereby improving the regeneration process. In this manner, the filter assembly according to the invention can be regenerated by heating the particulate filter 4 to a temperature which is lower than what otherwise would have been expected.

Another way of obtaining the required increase in temperature is by arranging a heating device in the ash collecting unit 7. Such a heating device (not shown) is preferably of electric type and connected to a power device (not shown) adapted for supplying electric current for the heating of the heating device.

A further method of providing the require temperature for the regeneration is by controlling the engine in question in a manner so as to initiate an increase in temperature. In particular, such a control is carried out so as to obtain an increased concentration of CO in the exhaust gas.

The particulate filter 4 according to the invention can be provided with a catalytic coating not only for improving the regeneration process but also for purifying the gas flow being guided through the particulate filter 4. The particulate filter 4 can be coated at least partly with a suitable catalytic coating for oxidation of hydrocarbon compounds and carbon monoxide. In addtion, the particulate filter 4 can be coated at least partly with a suitable catalytic coating for accumulating NOₓ compounds or reducing the concentration of NOₓ compounds in the gas flow.

Regarding the dimensions of the filter assembly 1 and its components, it can be noted that in a normal application of the invention, the length of the particulate filter 4 is preferably approximately 120 mm, whereas the diameter of the particulate filter 4 is approximately 140 mm. In the embodiment described with reference to the drawings, the ash collecting unit 7 is a cylindrical unit having generally the same diameter as the particulate filter 4. However, other designs and shapes are possible within the scope of the invention. An important principle behind the invention relates to the fact that the ash collecting unit 7 is manufactured of a size which is sufficient for containing the ash which can be expected to be accumulated during the entire lifetime of the vehicle in question, i.e. during driving at least approximately 240000 km with the vehicle.

Consequently, the filter assembly 1 in general, and the ash collecting unit 7 in particular, does not have to be made in a manner so as to be removed and replaced when it is full. If for example the ash collecting unit 7 is of cylindrical shape, the length of the ash collecting unit 7 can be approximately 50 mm.

The length of the slits 12 shown in Fig. 2 should be relatively short, but must however be sufficiently long for allowing a gas flow therethrough without any substantial pressure drop. Preferably, the length of the slits 12 is approximately 10 mm. This means that the outgoing gas flow in the radial direction will reach the passage 5 in an optimum manner.

The dimensions given above can be regarded as suitable for a normal application of the invention in a car having a five cylindre diesel engine of 2,4 litres. It is obvious that other applications of the invention will lead to other dimensions of the filter assembly 1 and its components.

Furthermore, the wall structure 10 (see Fig. 2) of the particulate filter 4 is preferably manufactured as a honeycomb structure having walls with a thickness of approximately 0,2-0,3 mm. Normally, a channel density of approximately 300 cpsi (cells per square inch). The wall structure 10 is preferably manufactured from cordierite or silicon carbide or other suitable materials.

The front end plugs 10a, the rear end plugs 10b and the channel plugs 10c are preferably dimensioned with a thickness which is approximately 50% more than its width. In a normal application, the thickness is approximately 3 mm, whereas its width is approximately 2 mm.

Furthermore, the passage 5 is as narrow as possible, and preferably defines an area which is generally of the same magnitude as the area of the inlet 2 to the filter assembly 1. In a normal application of the invention, the passage 5 has a width in the radial direction which is approximately 3-4 mm.

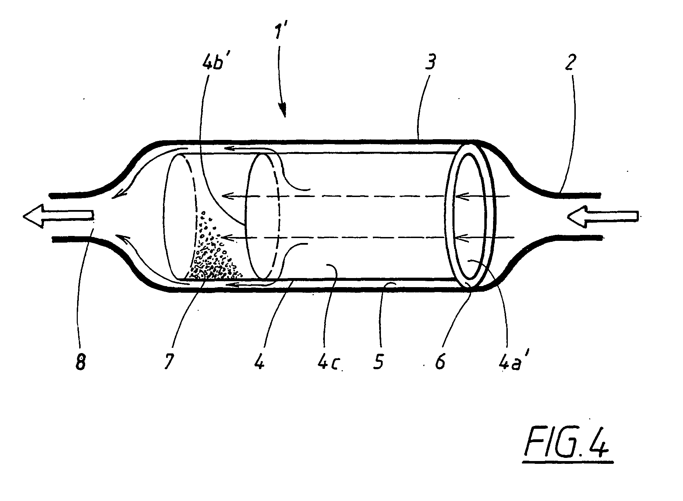

An alternative embodiment of the invention is shown in Fig. 4, which shows a filter assembly 1' with an inlet 2, a housing 3 and a particulate filter 4 as described above. The difference between the embodiment shown in Fig. 1 and Fig. 4, however, is constituted by the fact that the particulate filter 4 according to Fig. 4 is positioned in a reverse direction as compared with Fig. 1. This means that the slits according to the embodiment in Fig. 4 will be positioned close to the ash collecting unit 7, whereas the slits 12 according to Figs. 1 and 2 are located at the inlet 2 of the filter assembly 1. This also means that the inlet end face 4a of Fig. 1 is arranged close to the peripheral slits 12, but constitutes an outlet end face 4b' of the embodiment shown in Fig. 4. In a corresponding manner, the outlet end face 4b shown in Fig. 1 will be positioned at the inlet 2 of the filter assembly 1' in Fig. 4 and will function as an inlet end face 4a' of the embodiment in Fig. 4.

The pattern of plugs provided in the particulate filter 4 in Fig. 4 is exactly the same as the pattern of plugs in the particulate filter 4 shown in Fig. 1. This means that the embodiment shown in Fig. 4 will function in a manner in which an incoming gas flow will be guided into the particulate filter 4 via said inlet end face 4a'. In a manner as described above, soot will be deposited in the wall structure of the particulate filter 4 during the passage of the gas flow. The gas flow will reach the ash collecting unit 7 so that ash is deposited, after which it will be forced out in a radial direction of the particulate filter 4, via the slits. Consequently, the gas flow will not flow all the way back through the particulate filter 4. This means that the heat exchange process of the embodiment shown in Figs. 1 and 2 will not be provided by means of the embodiment shown in Fig. 4.

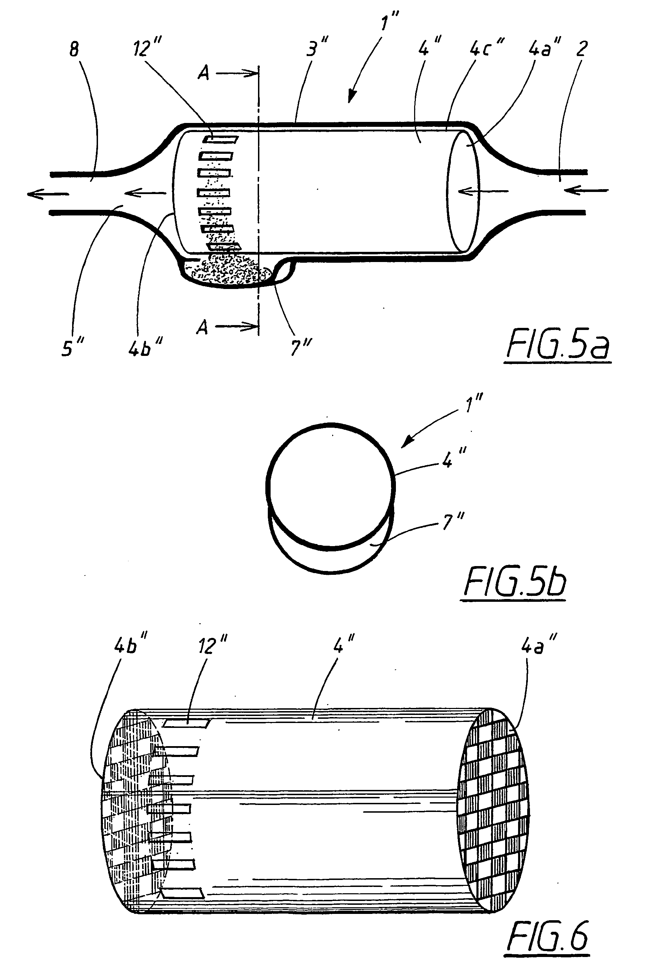

A further embodiment of the present invention is shown in Figs. 5a and b and 6. As shown in Fig. 5a, this embodiment is constituted by a filter assembly 1 " with an inlet 2, an outlet 8, a housing 3" and a particulate filter 4". The particulate filter 4" has an inlet end face 4a", an outlet end face 4b" and a peripheral wall 4c", and is provided with a number of slits 12" around its periphery. An incoming gas flow is directed towards the inlet end face 4a" as shown by means of arrows. The inlet end face 4a" is designed with a checkered plug pattern as shown in detail in Fig. 6, whereas the outlet end face 4b" comprises a plug pattern which is arranged so as to force the gas flow to go through a wall structure the particulate filter 4" (and thus be filtered) before it reaches a passage 5" downstream of the particulate filter 4". The plug pattern is also designed so as to define a path for ash particles, i.e. particles which are so big that they cannot enter the wall structure, so that these ash particles may fall down into an ash collecting unit 7" via the slits 12", in a manner which will be described below. After passing through the particulate filter 4", the gas flow will be guided out through the outlet end face 4b" and further to the passage 5" which forms part of the housing 3" and which connects the outlet end face 4b" with the outlet 8.

The ash collecting unit 7" is positioned generally underneath the particulate filter 4", preferably at the section of the particulate filter 4" where the slits 12" are located. In this manner, particles being carried with the gas flow exiting through the silts 12" can be collected in the ash collecting unit 7".

More precisely, the ash collecting unit 7" is not connected to the passage 5", which means that the exhaust gas will be brought through the channels of the particulate filter 4" in a direction towards the outlet end face 4b". The exhaust gas will be forced through said walls and eventually out to the passage 5", whereas the ash particles will be forced out through the slits 12" and into the ash collecting unit 7" by means of gravity (due to the fact that the ash particles cannot be forced through the walls of the particulate filter 4").

Fig. 5b shows a cross-section of the filter assembly 1 " as described above with reference to Fig. 5a, and along the line A-A as indicated in Fig. 5a. In particular, Fig. 5b shows that the ash collecting unit 7" extends around a lower portion of the periphery of the particulate filter 4". In this manner, ash particles being transported with the exhaust gas can be guided to the ash collecting unit 7". If the filter assembly 1 " is used for example in a car, the ash collecting unit 7" can be dimensioned so as to accumulate the entire amount of ash particles which is generated during the lifetime of the car, i.e. during driving at least approximately 240000 km with the vehicle. In such case, the ash collecting unit 7" is preferably designed with a volume of approximately 0,5 litres. However, the invention is not limited to any particular volume of any specific dimensions or design of the ash collecting unit 7" or any other parts of the filter assembly 1 ".

In particular, it can be noted that the invention can be designed in the form of one single monolithic structure. This means that the manufacturing costs can be kept low, and also that the structure is relatively simple without the need for additional components apart from the monolithic structure, which is an advantage.

Furthermore, the design according to the invention can be used for collecting ash in a continuous manner. In particular, the design shown in Figs. 5a and 5b comprises an ash collecting unit 7" which allows such a continuous collection. This means that no particular arrangements for control of a discharge of ash at certain time intervals is necessary.

As shown in Fig. 6, which is a perpective view of a particulate filter 4" according to said further embodiment, the pattern of plugs at the outlet end face 4b" is designed to guide the ash particles in a generally radial direction towards the slits 12". To this end, the outlet end face 4b" is arranged in a similar manner as the pattern of plugs shown in Fig. 3a. This means that a gas flow will be guided towards and into the inlet end face 4a", through the particulate filter 4" and then further towards the passage 5" via the outlet end face 4b". During the passage of the gas flow to the passage 5", ash particles will pass through the slits 12" and be deposited in the ash collecting unit 7".

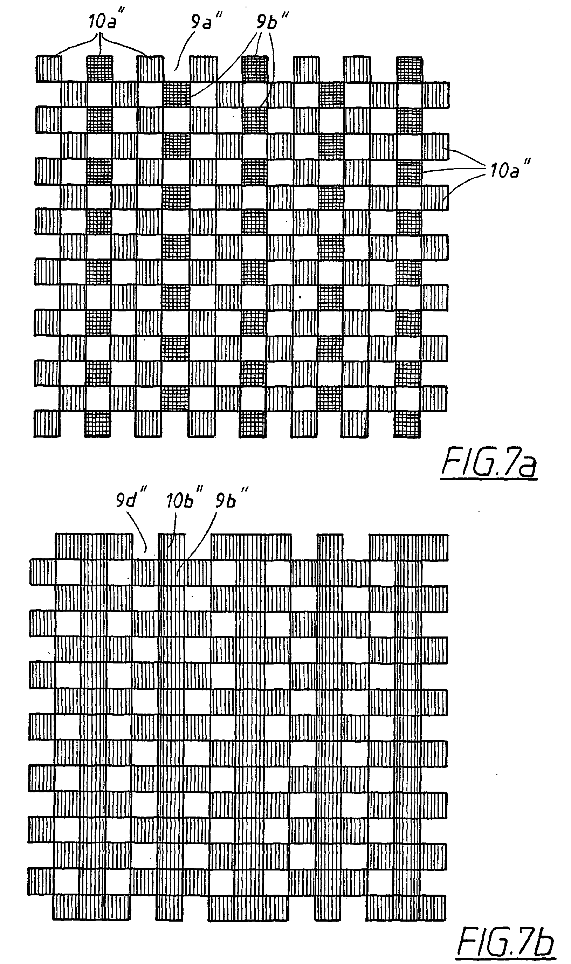

Figs. 7a-c show the pattern of plugs provided in the particulate filter 7" and described with reference to Figs. 5a, 5b and 6. The pattern of plugs in the particulate filter 4" corresponds generally to that which is shown in Figs. 2 and 3a-3d, but has been modified in order to direct the ash particles to the ash collecting unit 7" and to guide the exhaust gas through the outlet end face 4b" and further to the passage 5.

Fig. 7a shows the pattern of plugs in the inlet end face 4a", wherein a number of open passages or channels 9a" are defined. As shown in Fig. 7b, which shows the pattern of plugs in the outlet rear face 4b", these channels 9a" are plugged in the outlet end face 4b", which means that the channel indicated by reference numeral 9a" in Fig. 7a corresponds to the position of the rear end plug indicated by reference numeral 10b" in Fig. 7b.

Furthermore, a number of fron end plugs 10a" are arranged in the inlet end face 4a" as shown in Fig. 7a. These front end plugs 10a" are arranged in a checkered pattern. Also, as indicated in Figs. 7a and 7b, some of the channels are arranged so that they are terminated with a plug both in the inlet end face 4a" and the outlet end face 4b". Such channels are indicated by means of reference numeral 9b" in Figs. 7a and 7b. Also, such channels are black in Fig. 7a, whereas those channels which are terminated by means of a plug in the inlet end face 4a" but which are open in the outlet end face 4b" are light grey in Fig. 7a.

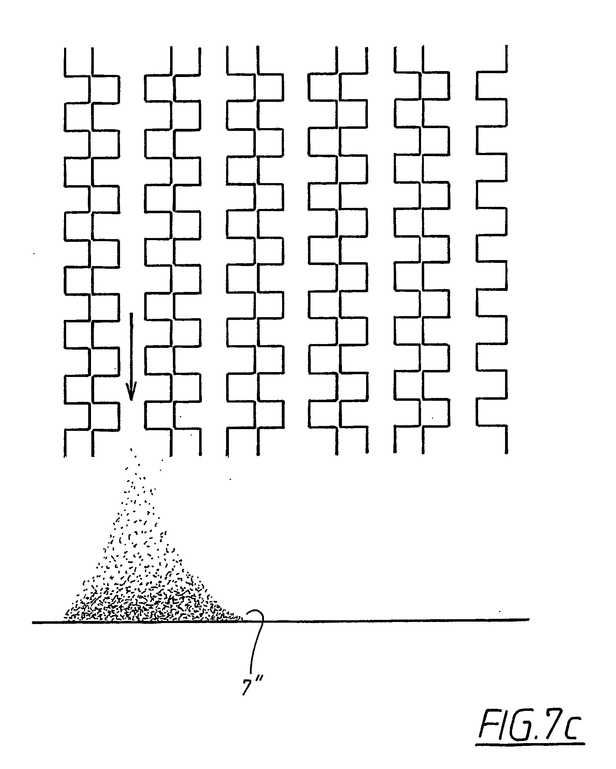

Fig. 7c indicates in a schematical manner (which corresponds generally to Fig. 3d as explained above) a cross-sectional view of the particulate filter 4" as regarded at a position generally where the slits 12" are located, i.e. upstream of the outlet end face 4b". Due to the design of the wall structure and the plugs, a number of paths (of which one path indicated by means of an arrow in Fig. 7c) are formed so as to allow the ash particles to be guided to the ash collecting unit 7".

The invention is not limited to the embodiment described above, but may be varied within the scope of the appended claims. For example, the invention can be carried out with different types of materials having different dimensions, depending on the particular gas flow for which the invention is used. Also, the porosity of the wall structure may also vary along the particulate filter 4.

Furthermore, the pattern of plugs may be designed in different ways, as long as it can be used so as to control a gas flow towards an ash collecting unit and also in a radial direction towards a passage outside the particulate filter (see Figs. 1 and 4), or alternatively through an outlet end face (see Fig. 5a) whereby the ash particles are guided through peripheral openings.

The honeycomb structure to be used for the particulate filter can be arranged as a number of separate elongated sections having for example a square cross-section and being positioned side by side so as to form the complete particulate filter. In such an embodiment, a small distance between two adjacent sections can be sufficient to allow passage of gas flow between said sections. Furthermore, the sections in the particulate filter are generally designed in such a way so that they can be manufactured by extrudation. Also, the sections are suitably assembled to a complete particulate filter unit unit by means of sintering.

According to a particular embodiment, the particulate filter can be arranged in an inclined manner with respect to a horizontal direction, i.e. so that the deposition of ash in the ash collecting unit is improved by means of the gravity force of the ash particles.

## Claims

1. Filter assembly (1; 1'; 1") for treatment of a gas flow and comprising:
a particulate filter (4; 4") having an inlet end face (4a; 4a' ; 4"), an outlet end face (4b; 4b' ; 4b"), a peripheral wall (4c) and a honeycomb wall structure (10) at least partly of porous ceramic material defining a plurality of channels (9) extending from said inlet end face (4a; 4a' ; 4") to said outlet end face (4b; 4b' ; 4b"), wherein said wall structure (10) is adapted for accumulating particulate matter during passage of said gas flow between said channels (9),
an inlet (2;) for feeding said gas flow to said inlet end face (4a; 4a' ; 4a"),
an outlet (8) for discharging said gas flow after passing through said particulate filter (4; 4"), and
a housing (3; 3") accommodating said particulate filter (4; 4") and defining a passage (5; 5") from said particulate filter (4; 4") to said outlet (8), and
**characterized in that** it comprises an ash collecting unit (7; 7") arranged for accumulating ash particles (11) in said gas flow,
**characterized in that** said particulate filter (4; 4") being provided with means (10, 12) for guiding said gas flow towards said ash collecting unit (7; 7") and for guiding said gas flow towards said passage (5; 5"), wherein said means (10, 12) comprises a pattern of plugs (10a, 10b, 10c) arranged in said channels (9) and a pattern of openings (12) along said peripheral wall (4c) so as to guide said gas flow towards said openings (12).

2. Filter assembly according to claim 1, **characterized in that** said ash collecting unit (7) is positioned downstream of said outlet end face (4b; 4b') so as to form an extension of said particulate filter (4; 4').

3. Filter assembly (1) according to claim 2 **characterized in that** said pattern of plugs (10a, 10b, 10c) is arranged for allowing an incoming flow of gas through said particulate filter (4) to said ash collecting unit (7), and for allowing a return flow of said gas flow through said particulate filter (4) in a reverse direction with respect to said incoming flow of gas, thereby allowing heat exchange between said incoming flow and said return flow.

4. Filter assembly (1; 1') according to claim 3 of 2, **characterized in that** said passage (5) extends between said peripheral wall (4c) and the inside of said housing (3).

5. Filter assembly according to claim 1, **characterized in that** said ash collecting unit (7") is positioned at least partly underneath the particulate filter (4").

6. Filter assembly (1") according to claim 1, **characterized in that** said means comprises a pattern of plugs arranged in said channels and a pattern of openings (12") along said peripheral wall, said plugs and openings being adapted so as to guide said gas flow to said outlet end face (4b") whereby said ash particles (11) are guided in a generally radial direction of the particulate filter (4") towards said openings (12") and further to said ash collecting unit (7").

7. Filter assembly (1; 1'; 1") according to any one of the preceding claims, **characterized in that** said particulate filter (4; 4") comprises means for allowing a regeneration of soot.

8. Filter assembly (1; 1'; 1") according to claim 7, **characterized in that** said means comprises means for increasing the temperature of the gas flow.

9. Filter assembly (1; 1'; 1") according to claim 8, **characterized in that** said means comprises a heating device arranged in said ash collecting unit (7; 7").

10. Filter assembly (1; 1'; 1") according to claim 8, **characterized in that** said means comprises a burner for heating said gas flow.

11. Filter assembly (1; 1'; 1") according to claim 7, **characterized in that** said means comprises a catalytic coating arranged at least partly on said wall structure (10) for decreasing the temperature required for combustion of soot during said regeneration and/or facilitate regeneration of said particulate filter (4).

12. Filter assembly (1; 1'; 1") according to any one of the preceding claims, **characterized in that** said wall structure (10) is at least partly provided with a catalytic coating for reducing harmful substances in said gas flow.

## Patentansprüche

1. Filteranordnung (1; 1'; 1") zur Behandlung einer Gasströmung und umfassend:
einen Partikelfilter (4; 4") mit einer Einlassendfläche (4a; 4a'; 4"), einer Auslassendfläche (4b; 4b'; 4b"), einer Umfangswand (4c) und einer Wabenwandstruktur (10) zumindest teilweise aus porösem Keramikmaterial, die eine Mehrzahl von Kanälen (9) definiert, die sich von der Einlassendfläche (4a; 4a'; 4") zu der Auslassendfläche (4b; 4b'; 4b") erstrecken, wobei die Wandstruktur (10) zum Anhäufen von Partikelmaterial während eines Durchgangs der Gasströmung zwischen den Kanälen (9) angepasst ist,
einen Einlass (2) zum Zuführen der Gasströmung zu der Einlassendfläche (4a; 4a'; 4a"),
einen Auslass (8) zum Ausgeben der Gasströmung, nachdem sie durch den Partikelfilter (4; 4") hindurch gelangt ist, und
ein Gehäuse (3; 3"), das den Partikelfilter (4; 4") aufnimmt und einen Durchgang (5; 5") von dem Partikelfilter (4; 4") zu dem Auslass (8) definiert, und
**dadurch gekennzeichnet, dass** sie eine Aschensammeleinheit (7; 7") aufweist, die zum Anhäufen von Aschepartikeln (11) in der Gasströmung angeordnet ist,
**dadurch gekennzeichnet, dass** der Partikelfilter (4; 4") mit einem Mittel (10, 12) zum Leiten der Gasströmung in Richtung der Aschensammeleinheit (7; 7") und zum Leiten der Gasströmung in Richtung des Durchgangs (5; 5") versehen ist, wobei das Mittel (10, 12) ein Muster von Stopfen (10a, 10b, 10c), die in den Kanälen (9) angeordnet sind, und ein Muster von Öffnungen (12) entlang der Umfangswand (4c) umfasst, um die Gasströmung in Richtung der Öffnungen (12) zu führen.

2. Filteranordnung nach Anspruch 1, **dadurch gekennzeichnet, dass** die Aschensammeleinheit (7) stromabwärts der Auslassendfläche (4b; 4b') positioniert ist, um eine Verlängerung des Partikelfilters (4; 4') zu bilden.

3. Filteranordnung (1) nach Anspruch 2, **dadurch gekennzeichnet, dass** das Muster der Stopfen (10a, 10b, 10c) angeordnet ist, um eine einströmende Gasströmung durch den Partikelfilter (4) zu der Aschensammeleinheit (7) zu ermöglichen und um eine Rückströmung der Gasströmung durch den Partikelfilter (4) in einer Umkehrrichtung in Bezug auf die einströmende Gasströmung zu ermöglichen, wodurch ein Wärmeaustausch zwischen der einströmenden Strömung und der Rückströmung ermöglicht wird.

4. Filteranordnung (1; 1') nach Anspruch 3 oder 2, **dadurch gekennzeichnet, dass** sich der Durchgang (5) zwischen der Umfangswand (4c) und dem Inneren des Gehäuses (3) erstreckt.

5. Filteranordnung nach Anspruch 1, **dadurch gekennzeichnet, dass** die Aschensammeleinheit (7") zumindest teilweise unterhalb des Partikelfilters (4") positioniert ist.

6. Filteranordnung (1 ") nach Anspruch 1, **dadurch gekennzeichnet, dass** das Mittel ein Muster aus Stopfen, die in den Kanälen angeordnet sind, und ein Muster von Öffnungen (12") entlang der Umfangswand umfasst, wobei die Stopfen und Öffnungen angepasst sind, um die Gasströmung zu der Auslassendfläche (4b") zu führen, wodurch die Aschepartikel (11) in einer im Wesentlichen radialen Richtung des Partikelfilters (4") in Richtung der Öffnungen (12") und weiter zu der Aschensammeleinheit (7") geleitet werden.

7. Filteranordnung (1; 1'; 1") nach einem der vorhergehenden Ansprüche, **dadurch gekennzeichnet, dass** der Partikelfilter (4; 4") ein Mittel aufweist, um eine Rußregeneration zu ermöglichen.

8. Filteranordnung (1; 1'; 1") nach Anspruch 7, **dadurch gekennzeichnet, dass** das Mittel ein Mittel zum Erhöhen der Temperatur der Gasströmung umfasst.

9. Filteranordnung (1; 1'; 1") nach Anspruch 8, **dadurch gekennzeichnet, dass** das Mittel eine Heizvorrichtung umfasst, die in der Aschensammeleinheit (7; 7") angeordnet ist.

10. Filteranordnung (1; 1'; 1") nach Anspruch 8, **dadurch gekennzeichnet, dass** das Mittel einen Brenner zum Erhitzen der Gasströmung aufweist.

11. Filteranordnung (1; 1'; 1") nach Anspruch 7, **dadurch gekennzeichnet, dass** das Mittel eine katalytische Beschichtung umfasst, die zumindest teilweise an der Wandstruktur (10) angeordnet ist, um die Temperatur, die zur Verbrennung von Ruß während der Regeneration benötigt wird, zu verringern und/oder die Regeneration des Partikelfilters (4) zu erleichtern.

12. Filteranordnung (1; 1'; 1") nach einem der vorhergehenden Ansprüche, **dadurch gekennzeichnet, dass** die Wandstruktur (10) zumindest teilweise mit einer katalytischen Beschichtung zum Verringern schädlicher Substanzen in der Gasströmung versehen ist.

## Revendications

1. Ensemble de filtre (1 ; 1' ; 1") pour le traitement d'un écoulement de gaz et comprenant :
un filtre à particules ( 4 ; 4") ayant une face extrémité d'entrée (4a ; 4a' ; 4"), une face extrémité de sortie (4b ; 4b' ; 4b"), une paroi périphérique (4c) et une structure de paroi en nid d'abeilles (10) faite au moins partiellement d'un matériau céramique poreux définissant une pluralité de canaux (9) s'étendant à partir de ladite face extrémité d'entrée (4a ; 4a' ; 4") à ladite face extrémité de sortie (4b ; 4b' ; 4b"), où ladite structure de paroi (10) est adaptée pour accumuler une matière particulaire durant le passage dudit écoulement de gaz entre lesdits canaux (9),
une entrée (2) pour l'alimentation dudit écoulement de gaz à ladite face d'extrémité d'entrée (4a ; 4a' ; 4"),
une sortie (8) pour l'évacuation dudit écoulement de gaz après son passage à travers ledit filtre à particules (4 ; 4"), et
un logement (3 ; 3") recevant ledit filtre à particules (4 ; 4") et définissant un passage (5 ; 5 ") à partir dudit filtre à particules (4 ; 4") vers ladite sortie (8), et
**caractérisé en ce qu'**il comprend une unité de collecte de cendres (7 ; 7") agencée pour accumuler des particules de cendres (11) dans ledit écoulement de gaz,
**caractérisé en ce que** ledit filtre à particules (4 ; 4") est muni de moyens (10, 12) pour guider ledit écoulement de gaz vers ladite unité de collecte de cendres (7 ; 7") et pour guider ledit écoulement de gaz vers ledit passage (5 ; 5"), où lesdits moyens (10, 12) comprennent un réseau d'obturateurs (10a, 10b, 10c) agencés dans lesdits canaux (9) et un réseau d'ouvertures (12) le long de ladite paroi périphérique (4c) de manière à guider ledit écoulement de gaz vers lesdites ouvertures (12).

2. Ensemble de filtre selon la revendication 1, **caractérisé en ce que** ladite unité de collecte de cendres (7) est positionnée en aval de ladite face d'extrémité de sortie (4b; 4b') de manière à former une extension dudit filtre à particules (4 ; 4').

3. Ensemble de filtre (1) selon la revendication 2, **caractérisé en ce que** ledit réseau d'obturateurs (10a, 10b, 10c) est agencé pour faire passer un écoulement de gaz entrant à travers ledit filtre à particules (4) vers ladite unité de collecte de cendres (7), et pour faire passer un écoulement en retour dudit écoulement de gaz à travers ledit filtre à particules (4) dans une direction inverse par rapport audit écoulement de gaz entrant, en permettant ainsi un échange thermique entre ledit écoulement entrant et ledit écoulement en retour.

4. Ensemble de filtre (1 ; 1') selon la revendication 3 ou 2, **caractérisé en ce que** ledit passage (5) s'étend entre ladite paroi périphérique (4c) et l'intérieur dudit logement (3).

5. Ensemble de filtre selon la revendication 1, **caractérisé en ce que** ladite unité de collecte de cendres (7") est positionnée au moins partiellement sous le filtre à particules (4").

6. Ensemble de filtre (1") selon la revendication 1, **caractérisé en ce que** lesdits moyens comprennent un réseau d'obturateurs agencés dans lesdits canaux et un réseau d'ouvertures (12") le long de ladite paroi périphérique, lesdits bouchons et lesdites ouvertures étant adaptés de manière à guider ledit écoulement de gaz vers ladite face extrémité de sortie (4b") grâce à quoi lesdites particules de cendres (11) sont guidées dans une direction généralement radiale du filtre à particules (4") vers lesdites ouvertures (12") et à nouveau vers ladite unité de collecte de cendres (7").

7. Ensemble de filtre (1 ; 1' ; 1") selon l'une quelconque des revendications précédentes, **caractérisé en ce que** ledit filtre à particules (4 ; 4") comprend des moyens pour permettre une régénération des suies.

8. Ensemble de filtre (1 ; 1' ; 1") selon la revendication 7, **caractérisé en ce que** lesdits moyens comprennent des moyens pour augmenter la température de l'écoulement de gaz.

9. Ensemble de filtre (1 ; 1' ; 1") selon la revendication 8, **caractérisé en ce que** lesdits moyens comprennent un dispositif de chauffage agencé dans ladite unité de collecte de cendres (7 ; 7").

10. Ensemble de filtre (1 ; 1' ; 1") selon la revendication 8, **caractérisé en ce que** lesdits moyens comprennent un brûleur pour chauffer ledit écoulement de gaz.

11. Ensemble de filtre (1 ; 1' ; 1") selon la revendication 7, **caractérisé en ce que** lesdits moyens comprennent un revêtement catalytique agencé au moins partiellement sur ladite structure de paroi (10) pour faire baisser la température nécessaire pour la combustion des suies durant ladite régénération et/ou faciliter la régénération dudit filtre à particules (4).

12. Ensemble de filtre (1 ; 1' ; 1") selon l'une quelconque des revendications précédentes, **caractérisé en ce que** ladite structure de paroi (10) est au moins partiellement munie d'un revêtement catalytique pour réduire les substances toxiques dans ledit écoulement de gaz.
